(19)

**Europäisches Patentamt**
**European Patent Office**
**Office européen des brevets**

(11)  **EP 3 565 755 B1**

(12)  **EUROPEAN PATENT SPECIFICATION**

(45) Date of publication and mention
of the grant of the patent:
**14.07.2021  Bulletin 2021/28**

(51) Int Cl.:
***B62D 7/15*** (2006.01)

(21) Application number: **18700225.8**

(86) International application number:
**PCT/GB2018/050002**

(22) Date of filing: **02.01.2018**

(87) International publication number:
**WO 2018/127687 (12.07.2018 Gazette 2018/28)**

(54) **APPARATUS AND METHOD FOR POSITION SENSING, CORRECTION AND MODE CHANGE IN A MULTI-AXLE STEERING SYSTEM**

VORRICHTUNG UND VERFAHREN FÜR POSITIONSERFASSUNG, KORREKTUR UND MODUSWECHSEL BEI EINEM MEHRACHSIGEN LENKSYSTEM

APPAREIL ET PROCÉDÉ DE DÉTECTION DE POSITION, DE CORRECTION ET DE CHANGEMENT DE MODE DANS UN SYSTÈME DE DIRECTION À ESSIEUX MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.01.2017  GB 201700054**

(43) Date of publication of application:
**13.11.2019  Bulletin 2019/46**

(73) Proprietor: **Mecalac Construction Equipment UK Limited**
**Prologis Park**
**Coventry**
**CV6 4BX (GB)**

(72) Inventors:
• **SOKHI, Satpal**
  **Coventry CV6 4BX (GB)**
• **WORTHINGTON, Carl**
  **Coventry CV6 4BX (GB)**

(74) Representative: **Cabinet Laurent & Charras**
**Le Contemporain**
**50 Chemin de la Bruyère**
**69574 Dardilly Cedex (FR)**

(56) References cited:
**EP-A1- 0 597 655      DE-A1- 4 334 279**
**DE-A1- 10 304 796**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is concerned with an apparatus and a method for position sensing, correction and mode change in a construction vehicle multi-axle steering system. More specifically, the present invention is concerned with an apparatus and method for detecting the steering angle of at least one axle to control mode change in a multi-mode multi-axle steering system, in addition to automatically correcting steering misalignment.

Multi-axle steering systems have the ability to turn at least two pairs of wheels on a vehicle. Such systems are also known as "four-wheel steering systems", but will be referred to as "multi-axle steering systems" here to avoid confusion with the four-wheel steer mode of operation (described below). In the construction sector, vehicles such as backhoe loaders and telehandlers often utilise multi-axle steering to increase the versatility of the vehicle. Typically, such systems are multi-modal-i.e. have several modes of operation.

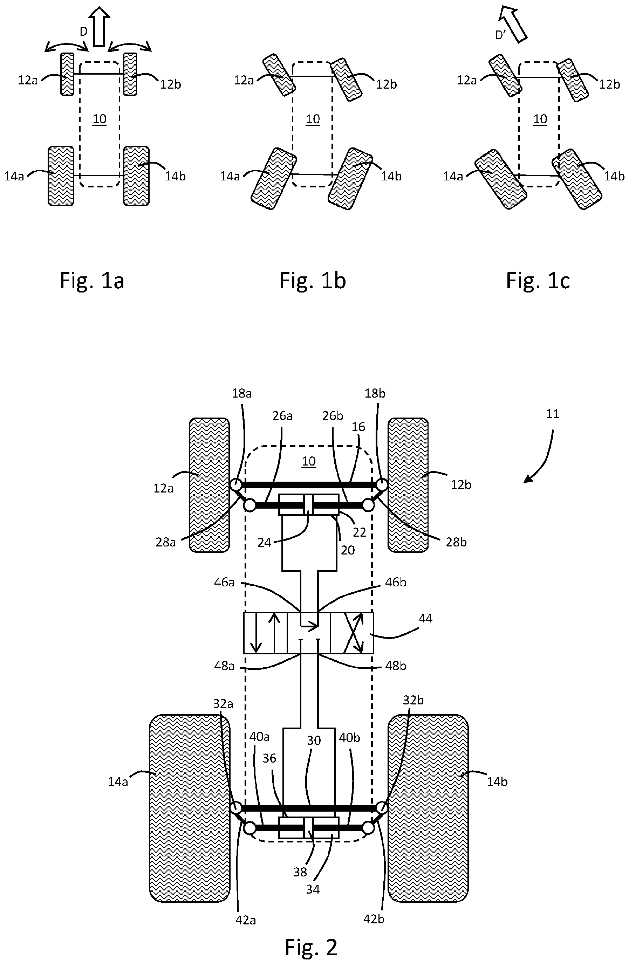

Referring to Figures 1a, 1b and 1c there is shown a schematic of three steering modes of a known backhoe loader having multi-axle steering system. The general direction of travel with the wheels aligned is shown as D in Figure 1a. The backhoe loader 10 has a pair of front wheels 12a, 12b on a front axle and a pair of rear wheels 14a, 14b on a rear axle. The modes of operation are as follows:

- Two-wheel steer mode (Fig. 1a). In which the front wheels 12a, b steer in response to an input at the steering wheel;
- Four-wheel steer mode (Fig. 1b). In which the front wheels 12a, b and rear wheels 14a, b steer in response to an input at the steering wheel. The rear wheels steer oppositely to the front wheels to provide a tighter turning circle.
- Crab steer mode (Fig. 1c). In which the front wheels 12a, b and rear wheels 14a, b steer in response to an input at the steering wheel. The rear wheels steer in the same direction as the front wheels such that the vehicle "crabs", or moves in a linear direction D' having a lateral component.

In this prior art example, hydraulic steering is used. Each wheel is mounted on a knuckle which is rotationally mounted to the axle about a steering axis. A double-sided hydraulic ram placed between the wheels and behind the axle in the direction of travel is used to rotate each pair of knuckles. Pressurised fluid is provided to the left side of the ram to turn the wheels right, and vice versa.

Rams are provided on each axle. The front and rear rams are in hydraulic communication via a hydraulic valve. The three modes of steering are governed by the hydraulic valve. In the two-wheel steer mode, the valve is set to provide a closed circuit between the two sides of the front ram. The rear ram is locked by blocking flow to / from either side. In the four-wheel steer mode, the valve connects the front ram and rear ram on opposite sides, such that movement of the front ram in one direction results in movement of the rear ram in the opposite direction. In the crab steer mode, the valve connects the front ram and rear ram on the same sides, such that movement of the front ram in one direction results in movement of the rear ram in the same direction.

In order to transition between these modes, the driver needs to follow a specific routine. When moving from two-wheel steer to either four-wheel steer or crab steer, the driver activates a control in the cab. To make the transition, the wheels need to be straight and aligned (per Figure 1a). Thus upon receiving a demand to move into another mode, the steering control system will wait for the user to steer the front wheels into alignment with the rear.

The steering angle / position is detected by a magnetic position sensor on the outside of the front and rear rams. The sensors are mounted to the ram at the linear centre, and can detect the presence of the piston. Thus, once the piston is detected, the wheels are assumed to be aligned, and the valve is shifted to the desired mode.

Similarly, when switching from either four-wheel steer or crab steer to two-wheel steer, alignment of the rear wheels is required. This is because the vehicle may be used to travel at high speeds, and thus alignment of the rear wheels is important to avoid tyre scrub and vehicle instability. The position of the rear wheels is also detected by a position sensor on the outside of the rear ram. The sensor is mounted to the ram at the linear centre, and can detect the presence of the piston. Thus, once the piston is detected, the wheels are assumed to be aligned, and the valve is shifted to the two-wheel steer mode, locking the rear wheels in position.

Should the rear wheels become misaligned (e.g. by travelling over a pothole at speed), this movement is detected by the sensor on the rear ram, and an alert is generated in the cab. The user must then undergo a correction routine at low speed.

There are several problems with the prior art multi-axle steering systems.

Firstly, the detection of the pistons inside the ram cylinders is inaccurate. There is no physical connection between the piston and the sensor, and as such the degree of accuracy is low (5 - 10mm) which can result in several degrees of inaccuracy with respect to the steering angle. The sensor is usually attached to the ram with jubilee clips, and as such can be knocked out of position.

Secondly, the time taken for the sensor to detect the piston, signal the controller and the controller to respond can be too slow if the vehicle is being steered quickly. Therefore the system can change modes after the respective set of wheels have "overshot" the intended position, meaning that alignment has not been achieved. It will also be noted that when turned rapidly, the system has a great deal of momentum, which may also cause overshoot.

Thirdly, if the rear wheels are knocked out of alignment by e.g. a pothole, the driver is alerted but has to take corrective action necessitating pulling off the road and going through a steering alignment process. This is inconvenient.

Fourthly, the sensors used in the prior art are binary (i.e. the piston is either present or absent). They cannot detect how far away the piston is, only that it is, or is not, in range. Therefore the degree of misalignment is not reported. Document DE4334279, which is seen as the closest prior art shows a construction vehicle according to the preamble of claim 1 and a method to control said construction vehicle according to the preamble of claim 11.

It is an aim of the present invention to overcome, or at least mitigate, these problems.

According to a first aspect of the invention there is provided a construction vehicle multi-axle steering system comprising:

> a first axle;
> a first steering knuckle attached to the first axle to rotate about a first steering axis;
> a first steering actuator configured to rotate the first steering knuckle about the first steering axis;
> a first rotary transducer arranged to measure a first rotation between the first axle and the first steering knuckle about the first steering axis;
> a second axle offset from the first in a direction of travel of the vehicle;
> a second steering knuckle attached to the second axle to rotate about a second steering axis;
> a second steering actuator configured to rotate the second steering knuckle about the second steering axis; and,
> a second rotary transducer arranged to measure a second rotation between the second axle and the second steering knuckle;
> in which:

>> the first and second actuators are two-sided hydraulic rams each having a first and a second side; and,
>> the second actuator has a hydraulic supply configured to supply pressurised hydraulic fluid to one side of the two-sided hydraulic ram to rotate the second steering knuckle;
>> and in which the vehicle has:

>>> a first steering mode in which the vehicle is steered with the second axle with the first axle unsteered;

>>> a second steering mode in which the first side of the first actuator is in fluid communication with the first side of the second actuator, and in which the second side of the first actuator is in fluid communication with the second side of the second actuator; and,

>>> a third steering mode in which the first side of the first actuator is in fluid communication with the second side of the second actuator, and in which the second side of the first actuator is in fluid communication with the first side of the second actuator;

>>> wherein the construction vehicle multi-steering system further comprises:

>>>> a controller configured to:

>>>> receive data from the first rotary transducer and from the second rotary transducer;

>>>> determine when the first rotation exceeds a predetermined range of steering angles either side of zero; and,

>>>> initiate an auto-correct sequence that is configured to automatically correct undesirable axle movement and in which:

>>>>> the first steering actuator is used to adjust the first rotation to within the predetermined range; and,

>>>>> wherein, during the auto-correct sequence, the controller:

>>>>>> determines a steering correction direction of the first rotation using the first transducer;

>>>>>> determines the direction of the second rotation using the second transducer whilst the vehicle is being steering; and,

selects the second or third steering mode based on the steering correction of the first direction and the direction of the second rotation to adjust the first rotation to within the predetermined range.

Advantageously, the use of a rotary encoder allows both continuous monitoring of the steering angle as well as a direction connection to the moving parts. It is therefore inherently more accurate than the prior art linear encoder.

This "auto-correct" is useful should the rear wheels (first wheels) become misaligned through drift or impact.

The first and second actuators advantageously provide a robust steering system.

Preferably the second steering mode is a crab steer mode in which the first and second steering knuckles rotate in the same direction and the third steering mode is a four-wheel steering mode in which the first and second steering knuckles rotate in opposite directions.

This provides the vehicle with flexibility.

Preferably there is a valve having a position for each of the first, second and third modes. Preferably the valve is biased into the first mode, and comprises at least one actuator controlled by the controller and configured to urge the valve into the second and / or third mode. More preferably the valve is in a central position in the first mode, and comprises two actuators configured to urge the valve into either the second or third mode position respectively. This allows simple control with the controller simply actuating one of two actuators or solenoids.

Preferably the controller is configured to:

receive a driver input relating to a requested change in vehicle steering mode;

determine when the first rotation meets a predetermined criterion indicating that it is centred; and,

change the vehicle steering mode when the first steering mode has met the predetermined criterion.

In other words, the system can wait for the wheels to be aligned before changing modes, to avoid misalignment.

The vehicle steering mode may be changed from four-wheel steer or crab steer to two-wheel steer, in which case the steering wheel is rotated until the rear axle is aligned.

Preferably when the vehicle steering mode is changed to four-wheel steer or crab steer, and the controller is configured to:

determine when the second rotation meets a predetermined criterion indicating that it is centred; and,

change the vehicle steering mode when the second steering mode has met the predetermined criterion.

Advantageously, this sets the based, aligned position for all four wheels.

The auto-correct allows for very simple and robust adjustment of the first rotation using the in situ four-wheel steer hydraulics.

Preferably there is provided an actuator controlled by the controller to select the second or third steering mode, in which the actuator is pulsed to incrementally adjust the first rotation to within the predetermined range. This avoids overshoot due to e.g. inertia. By "pulsed", we mean operated for incremental, predetermined time periods.

Preferably the controller is configured to determine a first rate of rotation from the first rotary transducer and to control the first steering actuator based on the rate of rotation.

Preferably the controller is configured to:

store a desired first rotation;

monitor the first rotation;

monitor the first rate of rotation;

command the first actuator to stop before the first rotation reaches the desired rotation based on the first rate of rotation.

Preferably the controller is configured to:
command the first actuator to stop at a rotation further from the desired first rotation as the first rate of rotation increases.

Advantageously, this allows the system to take account of the speed of steering and thus pre-emptively correct for overshoot due to either (i) inherent system delay or (ii) mechanical effects such as inertia.

According to a second aspect of the invention there is provided a method of controlling a construction vehicle multi-axle steering system comprising the steps of:

providing a first axle, a first steering knuckle attached to the first axle to rotate about a first steering axis, a first steering actuator configured to rotate the first steering knuckle about the first steering axis, and a first rotary transducer arranged to measure the rotation between the first axle and the first steering knuckle;

providing a second axle offset from the first in a direction of travel of the vehicle, a steering knuckle attached to the second axle to rotate about a second steering axis, a second steering actuator configured to rotate the second steering knuckle about the second steering axis and a second rotary transducer;

in which the first and second actuators are two-sided hydraulic rams each having a first and a second side, the second actuator having a hydraulic supply configured to supply pressurised hydraulic fluid to one side of the two-sided hydraulic ram to rotate the second steering knuckle; and, in which the vehicle has:

a first steering mode in which the vehicle is steered with the second axle with the first axle unsteered;

a second steering mode in which the first side of the first actuator is in fluid communication with the first side of the second actuator, and in which the second side of the first actuator is in fluid communication with the second side of the second actuator; and,

a third steering mode in which the first side of the first actuator in is fluid communication with the second side of the second actuator, and in which the second side of the first actuator is in fluid communication with the first side of the second actuator;

the method further comprising:

receiving data from the first rotary transducer and the second rotary transducer;

placing the vehicle in the first steering mode;

determining when the first rotation exceeds a predetermined range of steering angles either side of zero; and,

initiating an auto-correct sequence that is configured to automatically correct undesirable axle movement; and in which:

the first steering actuator is used to adjust the first rotation to within the predetermined range; and,

wherein, during the auto-correct sequence, the controller:

determines a steering correction direction of the first rotation using the first transducer;

determines the direction of a second rotation using the second transducer whilst the vehicle is being steering; and,

selects the second or third steering mode based on the steering correction direction of the first direction and the direction of the second rotation to adjust the first rotation to within the predetermined range.

Preferably:

the second steering mode is a crab steer mode in which the first and second steering knuckles rotate in the same direction; and,

the third steering mode is a four-wheel steering mode in which the first and second steering knuckles rotate in opposite directions.

Preferably the method comprises the step of providing a valve having a position for each of the first, second and third modes.

Preferably the method comprises the steps of:

resiliently biasing the valve into the first mode

providing at least one actuator; and,

using the actuator to urge the valve into the second and / or third mode.

Preferably the method comprises the steps of:

providing a first valve actuator;

providing a second valve actuator;

using the first valve actuator to place the vehicle into the second steering mode; and,

using the second valve actuator to place the vehicle into the third steering mode.

Preferably the method comprises the steps of:

receiving a driver input relating to a requested change in vehicle steering mode;

determining when the first rotation meets a predetermined criterion indicating that it is centred; and,

changing the vehicle steering mode when the first steering mode has met the predetermined criterion.

Preferably the method comprises the steps of:
changing the vehicle steering mode from four-wheel steer or crab steer to two-wheel steer.

Preferably the method comprises the steps of:

changing the vehicle steering mode to four-wheel steer or crab steer;

determining when the second rotation meets a predetermined criterion indicating that it is centred; and,

changing the vehicle steering mode when the second steering mode has met the predetermined criterion.

Preferably the method comprises the steps of:

providing an actuator to select the second or third steering mode;

pulsing the actuator to incrementally adjust the first rotation to within the predetermined range.

Preferably the method comprises the steps of:

determining a first rate of rotation from the first rotary transducer; and,

controlling the first steering actuator based on the rate of rotation.

Preferably the method comprises the steps of:

storing a desired first rotation;

monitoring the first rotation;

monitoring the first rate of rotation;

stopping the first actuator before the first rotation reaches the desired rotation based on the first rate of rotation.

Preferably the method comprises the steps of:
stopping the first actuator at a rotation further from the desired first rotation as the first rate of rotation increases.

An apparatus and method according to the invention will now be described with reference to the drawings in which:

Figures 1a, 1b and 1c are schematic views of prior art steering modes;

Figure 2 is a schematic of a steering system in accordance with the present invention;

Figure 3a is a rear view of a subassembly of the steering system of Figure 2;

Figure 3b is a plan view of the subassembly of Figure 3;

Figure 4 is a view of some cab controls of the steering system of Figure 2;

Figure 5 is a view of some cab indicators of the steering system of Figure 2;

Figure 6 is a further schematic of the steering system of Figure 2;

Figures 7 to 9 are flow diagrams of methods of operation of the steering system of Figure 2; and,

Figure 10 is a diagram of various ranges used by the controller of the steering system of Figure 2.

Referring to Figure 2, a hydraulic four-wheel hydrostatic steering system 11 in accordance with the invention is shown.

A vehicle 10 has a pair of front wheels 12a, 12b and a pair of rear wheels 14a, 14b.

The front wheels 12a, 12b are mounted to a stationary front axle 16. Each front wheel 12a, 12b is mounted on a knuckle (not visible in Figure 2) which is turn is rotationally mounted via a respective kingpin 18a, 18b to the front axle 16. A double-sided hydraulic ram 20 is provided having a cylinder 22 and a piston 24 slidable therein. The piston is connected at either side to a pair of steering shafts 26a, 26b which are rotationally mounted at their respective free ends to a pair of tie rods 28a, 26b. The tie rods 28a, 28b are connected to the knuckles to drive the knuckles and therefore wheels in rotation about the kingpins 18a, 18b.

The rear wheels 14a, 14b are mounted to a stationary rear axle 30. Each rear wheel 14a, 14b is mounted on a knuckle (not visible in Figure 2) which is turn is rotationally mounted via a respective kingpin 32a, 32b to the rear axle 30. A double-sided hydraulic ram 34 is provided having a cylinder 36 and a piston 38 slidable therein. The piston is connected at either side to a pair of steering shafts 40a, 40b which are rotationally mounted at their respective free ends to a pair of tie rods 42a, 42b. The tie rods 42a, 42b are connected to the knuckles to drive the wheels in rotation about the kingpins 32a, 32b.

The steering system 11 comprises a four port, three position hydraulic valve 44 linking the front ram 20 and rear ram 34. The valve has a first and second port 46a, 46b connected to the front cylinder 22 either side of the piston 24. The valve has a third and fourth port 48a, 48b connected to the rear cylinder 36 either side of the piston 38.

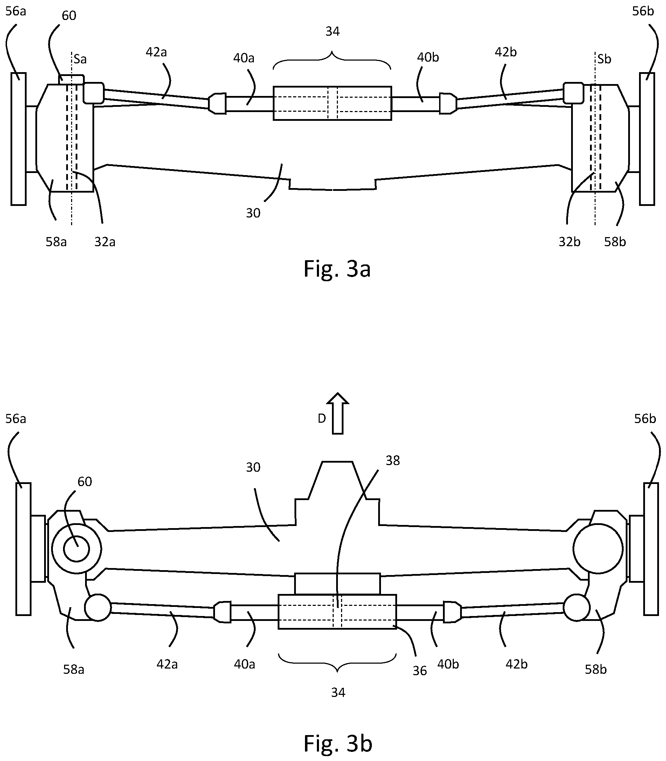

Referring to Figures 3a and 3b, there is shown a more detailed view of the rear axle of the vehicle 10. Figure 3a is a view from the rear of the vehicle in the direction of travel D with the wheels aligned and straight (i.e. towards the front axle) and Figure 3b is a plan view. The rear wheels 14a, 14b are not shown, and instead wheel hub assemblies 56a, 56b are shown to which the wheels 14a, 14b are attached. Each hub assembly 56a, 56b is attached to a respective knuckle 58a, 58b which is configured to rotate about the respective kingpin 32a, 32b about respective steering axes Sa and Sb.

A rotary encoder 60 is mounted to the left hand knuckle 58a. The encoder comprises a housing and a shaft (not visible) and is configured to generate an electrical signal indicative of the relative rotation thereof. The encoder 60 has an inherent resolution of r VDC per degree over a range of R degrees total range. The number of discrete measurement points is therefore $N = R/r$. The housing is attached to the knuckle 58a, whereas the shaft is connected to the kingpin 32a. Therefore the rotary encoder 60 is configured to measure relative rotation between the knuckle 58a and the axle 30. To put it another way, the rotary encoder is configured to measure the rotation of the wheel hub assembly 56a (and hence wheel 14a) about its steering axis Sa.

It will be noted that in other embodiments, the encoder housing and shaft may be attached to different components. What is important is that (i) there is a physical connection between the components of the encoder and respective parts of the steering system 11, and (ii) that relative rotation of those parts is indicative of the steering angle.

It will also be noted that because the rotational motions of the knuckles 58a, 58b (and hence the wheels 14a, 14b) are constrained to each other by the ram 34, only one encoder is required.

The encoder in this embodiment provides a potential difference between 0 and +5 Volts DC. The encoder produces a variable and continuous signal based on the position of the shaft. The encoder is calibrated such that at the extremes of the possible steering angle (known as the sensed range R1) Sa (e.g. full left lock) the reported potential difference is 0.5V, and at the other extreme of steering angle Sb (e.g. full right lock) the reported potential difference is 4.5V. If the potential difference drops below 0.5V or exceeds 4.5V, an error signal can be generated to indicate a problem with the system.

In order to calibrate the rotary encoder, it is set to the centre position (2.5V). The ram 34 is set to the centre position such that the steering angles about Sa and Sb are equal (0 degrees). The encoder is then attached in this position such that steering in either direction produces a signal above or below 2.5V.

A rotary encoder 61 is also positioned on the front axle in the same way.

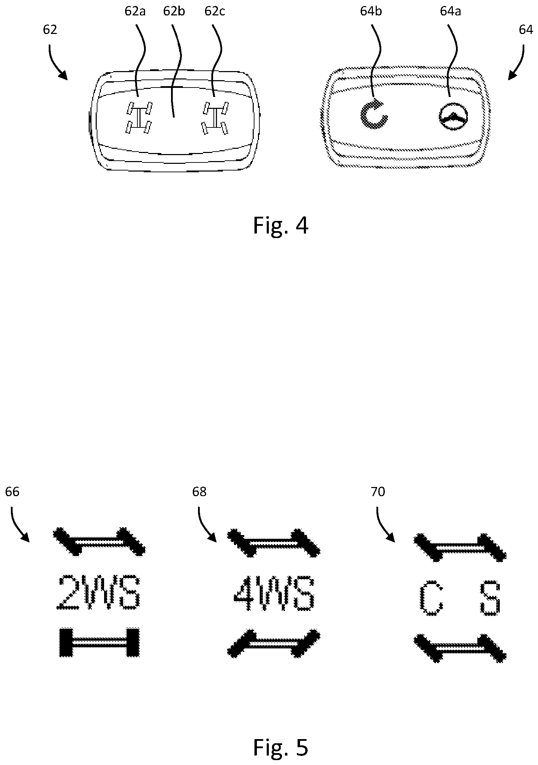

Referring to Figure 4, two cab controls 62, 64 are shown. The steering control 62 is a three position rocker switch having a crab steer position 62a, a central (two-wheel steer) position 62b and a four-wheel steer position 62c. The steering reset switch 64 is a two position momentary rocker switch having a default (steering) position 64a, and a steering reset position 64b.

Figure 5 shows a series of cab indicators to be displayed to the driver. Illumination / display of the indicator 66 indicates that the vehicle is in two-wheel steer mode. Illumination / display of the indicator 68 indicates that the vehicle is in four-wheel steer mode. Illumination / display of the indicator 70 indicates that the vehicle is in crab steer mode. An audible alarm is also provided.

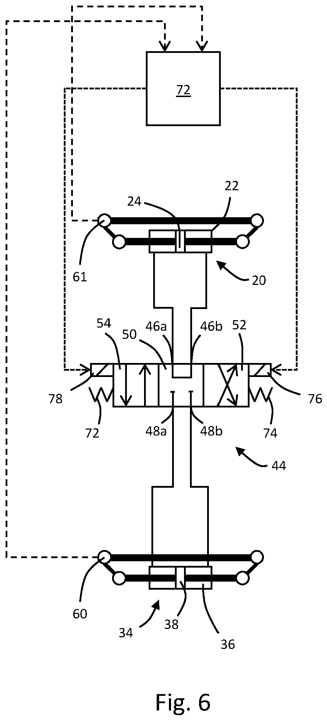

Figure 6 shows a schematic of the four-wheel steering control system for the vehicle 10. The valve 44 is shown in more detail. The valve 44 has three positions 50, 52, 54. The valve is biased into the central, first position 50 by a pair of opposed springs 72, 74. The valve comprises a four-wheel steer solenoid 76 which acts against the spring 72 to place the valve in the second condition 52. The valve comprises a crab steer solenoid 78 which acts against the spring 74 to place the valve in the third condition 54.

The first position 50 is the two-wheel steer mode position, in which the first and second ports 46a, 46b are in fluid communication. In order to steer the vehicle, hydraulic fluid is passed from a steering control valve (not shown) into one side of the cylinder 22 to move the piston 24 left or right. The hydraulic fluid passes to the other side of the cylinder through the valve 44. This rotates the wheels 12a, 12b. The second and third ports 48a, 48b are blocked, and as such the rear wheels 14a, 14b are unable to move.

In the second position 52, the respective opposite sides of the cylinders 22, 36 are in hydraulic communication. This means that a hydraulic steering demand (in the form of pressure) applied to the left hand side of the cylinder 22, will apply to the right hand side of the cylinder 36. This steers the front wheels in the opposite rotation direction to the rear wheels.

In the third position 54, the respective same sides of the cylinders 22, 36 are in hydraulic communication. This means that a hydraulic steering demand (in the form of pressure) applied to the left hand side of the cylinder 22, will also apply to the left hand side of the cylinder 36. This provides the crab steer mode of Fig. 1c.

The vehicle 10 comprises a body controller 72 which is configured to:

• Receive driver command data from the controls 62, 64;
• Receive data from the rotary encoders 60, 61;
• Transmit data to the driver using indicators 66, 68, 70 and the audible alarm; and,
• Transmit command data to the solenoids 78, 76.

The manner in which the controller 72 processes the received (input) data to generate the transmitted (output) data is explained by reference to the following operations. Note that the controller 72 is programmed with an interlock to ensure that changes in the steering mode are not permitted if either (i) the vehicle speed is greater than a predetermined speed (in this embodiment 10kmph) or (ii) the vehicle is in a predetermined gear or higher (in this embodiment, third gear).

Operation 1 - movement from four-wheel steer mode to two-wheel steer mode

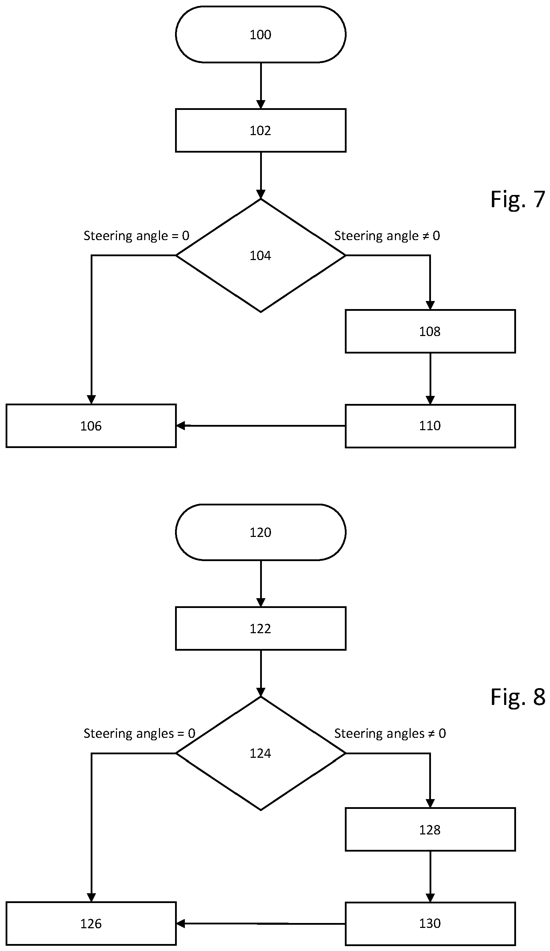

Referring to Figure 7, at starting point 100 the vehicle 10 is in four-wheel steering mode. The cab control switch 62 is in the four-wheel steer position 62c and the solenoid 78 is energised with the valve 44 in the second position 52. The four-wheel steer indicator 68 is lit.

When the operator requires two-wheel steering mode, he or she moves the steering mode switch 62 from the four-wheel steering mode position 62c to two-wheel steering mode position 62b (step 102). At step 104, the steering angle of the rear wheels 14a, 14b is determined by reference to the encoder 60. If the angle is zero (within a predetermined tolerance) the process continues to step 106. If the angle is not zero, the process continues to step 108.

At step 108, the two-wheel steer icon 66 will flash at a slow rate and the audible alarm will sound at a slow rate.

This indicates to the driver that the steering wheel should be turned until a zero angle at the rear wheels is achieved. At step 110 the driver turns the wheel. Whilst the wheel is being turned, the controller 72 monitors both the steering angle with the encoder 60, and also the rate of change of the steering angle (i.e. steering speed). The aim of the controller is to place the vehicle into two-wheel steer mode once the steering angle is zero. As discussed, there is an inherent delay between the encoder 60 reading zero and the valve moving to the first position 50. There is also inertia in the steering system which can cause the steering to "overshoot". Therefore, at higher steering speeds, the controller engages two-wheel steering mode before a zero angle is achieved.

This is achieved with a map which relates speed to an offset angle. In particular, in the present embodiment the following table is used by way of example:

| Speed range (points (N) per set time interval) | Offset-degrees |
|---|---|
| -100 to -50 | 10 |
| -50 to 0 | 5 |
| 0 to +50 | -5 |
| +50 to +100 | -10 |

As an example, if the encoder 60 is turning at 45 points per unit time interval, the controller will place the vehicle in two-wheel steering mode when the encoder measured angle is 5 degrees. In other words, at low speeds a lower overshoot is expected.

At step 106, the controller engages two-wheel steer mode. A signal is sent to de-energise the solenoid 78 and thus move the valve 44 to the first position 50. The audible alarm will sound at a constant rate for a predetermined time to acknowledge the two-wheel steering mode has engaged. The two-wheel steer icon 66 will now be displayed constantly. The machine is now in two-wheel steering mode.

Operation 2 - movement from four-wheel steer mode to two-wheel steer mode

This is essentially the same as operation 1, but with the respective controls, display and solenoid of crab-steer mode.

Operation 3 - movement from two-wheel steer mode to four-wheel steer mode

Referring to Figure 8, at starting point 120 the vehicle 10 is in two-wheel steering mode. The cab control switch 62 is in the two-wheel steer position 62b and the valve 44 is in the first position 50. The two-wheel steer indicator 66 is lit.

When the machine is operating in the two-wheel steering mode and the operator requires four-wheel steering mode, the operator moves the steering mode switch to the four-wheel steering mode position 62c (step 122). In order for four-wheel mode to be engaged, all four wheels need to be aligned and at a zero steering angle.

At step 124, the steering angles of the front wheels 12a, 12b and the rear wheels 14a, 14b are determined by reference to the encoders 60, 61. If the angles are zero (within a predetermined tolerance) the process continues to step 126. If the angles are not zero, the process continues to step 128.

At step 128, the four-wheel steer icon 68 will flash at a slow rate and the audible alarm will sound at a slow rate. This indicates to the driver that the steering wheel should be turned until zero angle (i.e. alignment) at the front axle is achieved. At step 130 the driver turns the wheel until zero angle at the front axle is achieved (the encoders 60, 61 are monitored by the controller 72).

At step 126, the controller engages four-wheel steer mode. A signal is sent to energise the solenoid 78 and thus move the valve 44 to the second position 52. The audible alarm will sound at a constant rate for a predetermined time to acknowledge the four-wheel steering mode has engaged. The four-wheel steer icon 66 will now be displayed constantly. The machine is now in four-wheel steering mode.

Operation 4 - movement from two-wheel steer mode to crab steer mode

This is essentially the same as operation 3, but with the respective controls, display and solenoid of crab-steer mode.

Operation 5 - movement from crab steer mode to four-wheel steer mode

The present invention has the advantage that the system can move directly from crab steer to four-wheel steer.

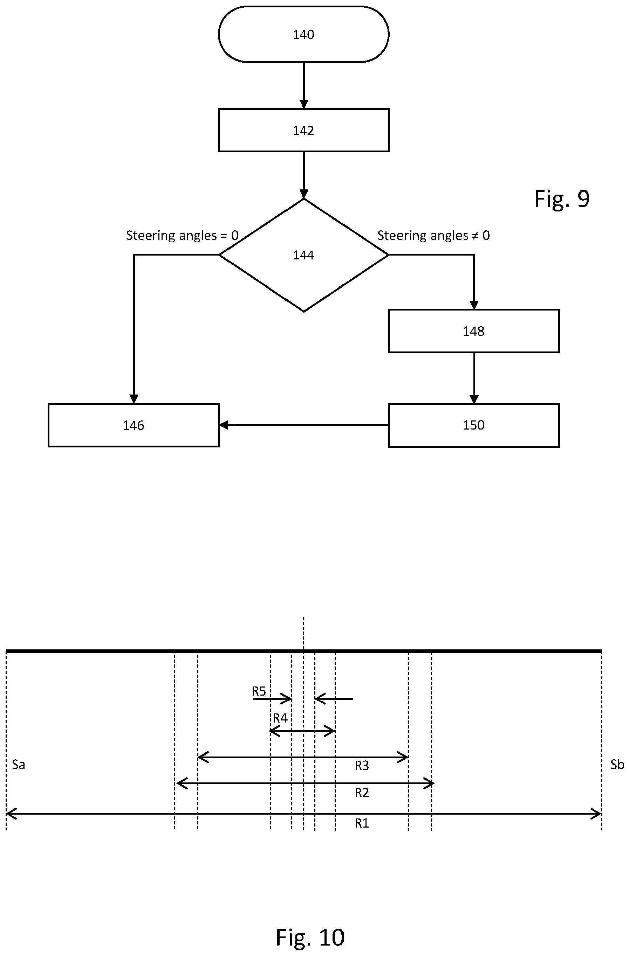

Referring to Figure 9, at starting point 140 the vehicle 10 is in crab steer mode. The cab control switch 62 is in the crab steer position 62a and the valve 44 is in the third position 54. The crab steer indicator 70 is lit.

When the machine is operating in the crab steer mode and the operator requires four-wheel steering mode, the operator moves the steering mode switch to the four-wheel steering mode position 62c (step 142). In order for four-wheel mode to be engaged, all four wheels need to be aligned and at a zero steering angle.

At step 144, the steering angles of the front wheels 12a, 12b and the rear wheels 14a, 14b are determined by reference to the encoders 60, 61. If the angles are zero (within a predetermined tolerance) the process continues to step 146. If the angles are not zero, the process continues to step 148.

At step 148, the four-wheel steer icon 68 will flash at a slow rate and the audible alarm will sound at a slow rate. This indicates to the driver that the steering wheel should be turned until zero angles (i.e. alignment) is achieved. At step 150 the driver turns the wheel until zero angles are achieved (the encoders 60, 61 are monitored by the controller 72).

At step 146, the controller engages four-wheel steer mode. A signal is sent to de-energise the solenoid 76 and energise the solenoid 78 and thus move the valve 44 to the second position 52. The audible alarm will sound at a constant rate for a predetermined time to acknowledge the four-wheel steering mode has engaged. The four-wheel steer icon 66 will now be displayed constantly. The machine is now in four-wheel steering mode

It will be noted that if there is some steering misalignment, the system is configured to make the appropriate adjustments in this method. If, in the crab steer mode, the front wheels are at a lesser steering angle than the rear wheels, then as the rear wheels hit zero degrees, they are held until the front wheels are aligned. If, in the crab steer mode, the front wheels are at a greater steering angle than the rear wheels, then the front wheels will hit zero first. The system will wait until the rear wheels hit zero degrees (by which time the front wheels have overshot) At this point, the rear wheels are held and the driver reverses the steering input to bring the front wheels to zero degrees.

Operation 6 - movement from four-wheel steer mode to crab steer mode

This is essentially the same as operation 6, but with the respective controls, display and solenoid of crab steer and four-wheel steer modes switched.

As above, if there is some steering misalignment, the system is configured to make the appropriate adjustments in this method. If, in the four wheel steer mode, the front wheels are at a lesser steering angle than the rear wheels, then as the rear wheels hit zero degrees, they are held until the front wheels are aligned. If, in the four wheel steer mode, the front wheels are at a greater steering angle than the rear wheels, then the front wheels will hit zero first. The system will wait until the rear wheels hit zero degrees (by which time the front wheels have overshot) At this point, the rear wheels are held and the driver reverses the steering input to bring the front wheels to zero degrees.

Steering auto-correct

As described above, the system 11 is well suited to changing vehicle steering modes. In addition, the system 11 is configured to automatically correct undesirable axle movement.

When in two-wheel steer mode, it is important that the rear axle stays at a zero steering angle. This is because the vehicle may travel at high speeds at which stability is important.

"Drift" may occur when the vehicle has been unused for a significant length of time. Hydraulic pressure in the rear steering ram 34 may have dropped. This can cause the rear axle to "drift" out of alignment slightly when steering in the first few moments of operation.

The controller 72 is programmed with several ranges or windows for the steering angle of the rear axle. One range known as the "drift tolerance window" R3 which represents a predetermined range of steering angles either side of zero.

If the drift is within the drift tolerance window, the controller 72 will attempt to correct it to within a sensor centre position tolerance window R5. Auto-correct will operate in the following situation:

- Vehicle speed is less than a predetermined maximum speed;
- Two-wheel steer mode engaged;
- The rear axle position is within the "drift tolerance window" R3;
- The front axle turning speed is greater than a predetermined minimum rate;
- The front axle turning speed is less than a predetermined maximum rate.

The turning speed of either axle is determined as follows, using the encoders 60 or 61. As mentioned above, the encoders have an inherent resolution of r VDC per degree over a range of R degrees total range. The number of measurement points is N = R/r. The turning speed is measured as the first derivative of N-i.e. $\frac{dN}{dt}$ (points moved per second). The derivative will be positive for one direction of steer, and negative for the other.

The controller 72 monitors the direction of steer of the front axle (i.e. whether $\frac{dN}{dt}$ is positive or negative). The controller 72 then activates either the four-wheel steer solenoid 76 or crab steer solenoid 78 to correct the rear axle position. The respective solenoid is pulsed for 20ms and this repeats until the rear axle is within the sensor centre position tolerance window R5.

In the following example it is assumed that both encoders sense in the same direction (e.g. left steer is positive angle in both cases). If the rear axle has a drift angle of +100 points (therefore requiring a correction of -100 points), then:

1. If the front axle direction of travel is negative $(\frac{dN}{dt}<0)$, the four-wheel steer solenoid 76 is pulsed to create a negative steer $(\frac{dN}{dt}<0)$ at the rear axle; or alternatively:

2. If the front axle direction of travel is positive $(\frac{dN}{dt}>0)$, the crab steer solenoid 78 is pulsed to create a negative steer $(\frac{dN}{dt}<0)$ at the rear axle.

The controller therefore selects the solenoid to pulse based on (i) the desired direction of the correction and (ii) the sensed direction of steer of the front axle.

Once the axle enters the sensor centre position tolerance window R5, no corrections will be made unless the axle exceeds the "reset correction window" R4, which is within the drift tolerance window but outside the sensor centre position tolerance window R5. This prevents the system 11 from constantly "hunting", and effectively provides damping from a control perspective.

If steering drift is outside of a rear sensor alarm R2 window for greater than a predetermined time (being outside the drift tolerance window), the two-wheel steer display 66 will flash at a fast rate, and the audible alarm sound at a fast rate. This prompts the driver to undertake a manual steering reset as follows:

1. The driver positions the steering mode selection switch 62 in to the two wheel steer position 62b
2. Press and hold the steering system reset button 64b for 2 seconds and release when the two wheel steer icon 66 flashes at a slower rate and the audible alarm sounds at a slower rate.
3. Turn the steering wheel in either direction to align the rear axle. The controller 72 will monitor the direction steering (as described above) and energised either the crab steer or four-wheel steer solenoid to correct the rear axle position.
4. Once the rear axle is within the sensor centre position tolerance window R5, the audible alarm will turn off and the two wheel steer icon 66 will continuously lit.
5. The machine is now reset in two wheel steer mode

Figure 9 shows the various ranges used by the controller diagrammatically. These are:

- The sensed range R1;
- The rear sensor alarm window R2;
- The drift tolerance window R3;
- The reset correction window R4; and,
- The sensor centre position tolerance window R5.

Variations fall within the scope of the present invention.

The hydraulic cylinders in the embodiment are both rearward of the axles, meaning that they both turn the wheels in the same direction when pressure is applied to one side. It is within the scope of the invention that the cylinders may be positioned both forward of the axles, or one forward and one rearward. In the latter example, pressurising the same sides of the cylinder will cause the wheels to rotate in opposition directions. The skilled addressee can adapt the above disclosure to account for this.

It will also be noted that other actuators may be used- for example other fluid driven actuators or electric actuators.

**Claims**

1. A construction vehicle multi-axle steering system comprising:

a first axle;
a first steering knuckle attached to the first axle to rotate about a first steering axis;
a first steering actuator configured to rotate the first steering knuckle about the first steering axis;
a first rotary transducer arranged to measure a first rotation between the first axle and the first steering knuckle about the first steering axis;
a second axle offset from the first in a direction of travel of the vehicle;
a second steering knuckle attached to the second axle to rotate about a second steering axis;
a second steering actuator configured to rotate the second steering knuckle about the second steering axis; and,
a second rotary transducer arranged to measure a second rotation between the second axle and the second steering knuckle;
in which:

the first and second actuators are two-sided hydraulic rams each having a first and a second side; and,
the second actuator has a hydraulic supply configured to supply pressurised hydraulic fluid to one side of the two-sided hydraulic ram to rotate the second steering knuckle;
and in which the system has:

a first steering mode in which the vehicle is steered with the second axle with the first axle unsteered;
a second steering mode in which the first side of the first actuator is in fluid communication with the first side of the second actuator, and in which the second side of the first actuator is in fluid communication with the second side of the second actuator; and,
a third steering mode in which the first side of the first actuator is in fluid communication with the second side of the second actuator, and in which the second side of the first actuator is in fluid communication with the first side of the second actuator;
wherein the construction vehicle multi-axle steering system further comprises:
a controller configured to:

receive data from the first rotary transducer and from the second rotary transducer; **characterised by**:
determining when the first rotation exceeds a predetermined range of steering angles either side of zero; and,
initiating an auto-correct sequence that is configured to automatically correct undesirable axle movement; and in which:

the first steering actuator is used to adjust the first rotation to within the predetermined range; and,
wherein, during the auto-correct sequence, the controller:

determines a steering correction direction of the first rotation using the first transducer;
determines the direction of the second rotation using the second transducer whilst the vehicle is being steered; and,
selects the second or third steering mode, based on the steering correction direction of the first direction and the direction of the second rotation, to adjust the first rotation to within the predetermined range.

2. A construction vehicle multi-axle steering system according to claim 1, in which:

the second steering mode is a crab steer mode in which the first and second steering knuckles rotate in the same direction; and,
the third steering mode is a four-wheel steering mode in which the first and second steering knuckles rotate in opposite directions.

3. A construction vehicle multi-axle steering system according to claim 1 or 2, comprising a valve having a position for each of the first, second and third modes.

**4.** A construction vehicle multi-axle steering system according to claim 3, in which the valve is biased into the first mode position, and comprises at least one actuator controlled by the controller and configured to urge the valve into the second and / or third mode position.

**5.** A construction vehicle multi-axle steering system according to claim 3, in which the valve is in a central position in the first mode, and comprises two actuators configured to urge the valve into either the second or third mode position respectively.

**6.** A construction vehicle multi-axle steering system according to claim 5, in which the controller is configured to:

receive a driver input relating to a requested change in vehicle steering mode;
determine when the first rotation meets a predetermined criterion indicating that it is centred; and,
change the vehicle steering mode when the first steering mode has met the predetermined criterion.

**7.** A construction vehicle multi-axle steering system according to claim 6, in which the vehicle steering mode is changed from four-wheel steer or crab steer to two-wheel steer, or
in which the vehicle steering mode is changed to four-wheel steer or crab steer, and in which the controller is configured to:

determine when the second rotation meets a predetermined criterion indicating that it is centred; and,
change the vehicle steering mode when the second steering mode has met the predetermined criterion.

**8.** A construction vehicle multi-axle steering system according to claim 1, comprising an actuator controlled by the controller to select the second or third steering mode, in which the actuator is pulsed to incrementally adjust the first rotation to within the predetermined range.

**9.** A construction vehicle multi-axle steering system according to any preceding claim, in which the controller is configured to determine a first rate of rotation from the first rotary transducer and to control the first steering actuator based on the rate of rotation.

**10.** A construction vehicle multi-axle steering system according to claim 9, in which the controller is configured to:

store a desired first rotation;
monitor the first rotation;
monitor the first rate of rotation;
command the first actuator to stop before the first rotation reaches the desired rotation based on the first rate of rotation, for example in which the controller is configured to:
command the first actuator to stop at a rotation further from the desired first rotation as the first rate of rotation increases.

**11.** A method of controlling a construction vehicle multi-axle steering system comprising the steps of:

providing a first axle, a first steering knuckle attached to the first axle to rotate about a first steering axis, a first steering actuator configured to rotate the first steering knuckle about the first steering axis, and a first rotary transducer arranged to measure the rotation between the first axle and the first steering knuckle;
providing a second axle offset from the first in a direction of travel of the vehicle, a second steering knuckle attached to the second axle to rotate about a second steering axis, a second steering actuator configured to rotate the second steering knuckle about the second steering axis and a second rotary transducer;
in which the first and second actuators are two-sided hydraulic rams each having a first and a second side, the second actuator having a hydraulic supply configured to supply pressurised hydraulic fluid to one side of the two-sided hydraulic ram to rotate the second steering knuckle; and,
in which the vehicle has:

a first steering mode in which the vehicle is steered with the second axle with the first axle unsteered;
a second steering mode in which the first side of the first actuator is in fluid communication with the first side of the second actuator, and in which the second side of the first actuator is in fluid communication with the second side of the second actuator; and
a third steering mode in which the first side of the first actuator is in fluid communication with the second side of the second actuator and the second side of the first actuator is in fluid communication with the first side of the second actuator;
the method further comprising:

receiving data from the first rotary transducer and the second rotary transducer;
placing the vehicle in the first steering mode;
the method being **characterised by**:

determining when the first rotation exceeds a predetermined range of steering angles either side of zero; and,
initiating an auto-correct sequence that is configured to automatically correct undesirable axle movement; and, in which:

the first steering actuator is used to adjust the first rotation 5 to which the predetermined range; and,
wherein, during the auto-correct sequence, a controller:

determines a steering correction direction of the first rotation using the first transducer;
determines the direction of a second rotation using the second transducer whilst the vehicle is being steered; and,
selects the second or third steering mode based on the steering correction direction of the first direction and the direction of the second rotation to adjust the first rotation to within the predetermined range.

12. A method of controlling a construction vehicle multi-axle steering system according to claim 11, in which:

the second steering mode is a crab steer mode in which the first and second steering knuckles rotate in the same direction; and,
the third steering mode is a four-wheel steering mode in which the first and second steering knuckles rotate in opposite directions.

13. A method of controlling a construction vehicle multi-axle steering system according to claim 11 or 12, comprising the step of:
providing a valve having a position for each of the first, second and third modes.

14. A method of controlling a construction vehicle multi-axle steering system according to claim 13, comprising the steps of:

resiliently biasing the valve into the first mode
providing at least one actuator; and,
using the actuator to urge the valve into the second and / or third mode, or comprising the steps of:

providing a first valve actuator;
providing a second valve actuator;
using the first valve actuator to place the vehicle into the second steering mode; and,
using the second valve actuator to place the vehicle into the third steering mode.

15. A method of controlling a construction vehicle multi-axle steering system according to claim 11, comprising the steps of:

receiving a driver input relating to a requested change in vehicle steering mode;
determining when the first rotation meets a predetermined criterion indicating that it is centred; and,
changing the vehicle steering mode when the first steering mode has met the predetermined criterion, for example comprising the steps of:
changing the vehicle steering mode from four-wheel steer or crab steer to two-wheel steer, or comprising the steps of:

changing the vehicle steering mode to four-wheel steer or crab steer;
determining when the second rotation meets a predetermined criterion indicating that it is centred; and,
changing the vehicle steering mode when the second steering mode has met the predetermined criterion.

16. A method of controlling a construction vehicle multi-axle steering system according to claim 11, comprising the steps of:

> providing an actuator to select the second or third steering mode;
> pulsing the actuator to incrementally adjust the first rotation to within the predetermined range.

17. A method of controlling a construction vehicle multi-axle steering system according to any of claims 11 to 16, comprising the steps of:

> determining a first rate of rotation from the first rotary transducer; and,
> controlling the first steering actuator based on the rate of rotation, for example
> comprising the steps of:
>
>> storing a desired first rotation;
>> monitoring the first rotation;
>> monitoring the first rate of rotation;
>> stopping the first actuator before the first rotation reaches the desired rotation based on the first rate of rotation, for example
>> stopping the first actuator at a rotation further from the desired first rotation as the first rate of rotation increases.

## Patentansprüche

1. Mehrachsiges Lenksystem für Baufahrzeuge, umfassend:

> eine erste Achse;
> einen ersten Achsschenkel, der an der ersten Achse befestigt ist, um sich um eine erste Lenkachse zu drehen;
> einen ersten Lenkaktuator, der so konfiguriert ist, dass er den ersten Achsschenkel um die erste Lenkachse dreht;
> einen ersten Drehwandler, der zur Messung einer ersten Drehung zwischen der ersten Achse und dem ersten Achsschenkel um die erste Lenkachse angeordnet ist;
> eine zweite Achse, die von der ersten in Fahrtrichtung des Fahrzeugs versetzt ist;
> einen zweiten Achsschenkel, der an der zweiten Achse befestigt ist, um sich um eine zweite Lenkachse zu drehen;
> einen zweiten Lenkaktuator, der so konfiguriert ist, dass er den zweiten Achsschenkel um die zweite Lenkachse dreht; und,
> einen zweiten Drehwandler, der zur Messung einer zweiten Drehung zwischen der zweiten Achse und dem zweiten Achsschenkel angeordnet ist;
> wobei:
>
>> der erste und zweite Aktuator zweiseitige Hydraulikzylinder sind, die jeweils eine erste und eine zweite Seite aufweisen; und,
>> der zweite Aktuator eine Hydraulikversorgung aufweist, die so konfiguriert ist, dass sie eine Seite des zweiseitigen Hydraulikzylinders mit unter Druck stehender Hydraulikflüssigkeit versorgt, um den zweiten Achsschenkel zu drehen;
>> und wobei das System aufweist:
>>
>>> einen ersten Lenkmodus, bei dem das Fahrzeug mit der zweiten Achse gelenkt wird, während die erste Achse ungelenkt ist;
>>> einen zweiten Lenkmodus, in dem die erste Seite des ersten Aktuators in Fluidverbindung mit der ersten Seite des zweiten Aktuators steht, und in dem die zweite Seite des ersten Aktuators in Fluidverbindung mit der zweiten Seite des zweiten Aktuators steht; und,
>>> einen dritten Lenkmodus, in dem die erste Seite des ersten Aktuators in Fluidverbindung mit der zweiten Seite des zweiten Aktuators steht, und in dem die zweite Seite des ersten Aktuators in Fluidverbindung mit der ersten Seite des zweiten Aktuators steht;
wobei das mehrachsige Lenksystem für Baufahrzeuge weiter umfasst:
eine Steuerung, die konfiguriert ist zum:
Empfangen von Daten vom ersten Drehwandler und vom zweiten Drehwandler; **gekennzeichnet durch**:

Bestimmen, wann die erste Drehung einen vorbestimmten Bereich von Lenkwinkeln auf beiden Seiten von Null überschreitet; und,
Einleiten einer automatischen Korrektursequenz, die so konfiguriert ist, dass unerwünschte Achsbewegungen automatisch korrigiert werden; und wobei:

der erste Lenkaktuator verwendet wird, um die erste Drehung auf den vorbestimmten Bereich einzustellen; und,
wobei während der automatischen Korrektursequenz die Steuerung:

eine Lenkkorrekturrichtung der ersten Drehung unter Verwendung des ersten Wandlers bestimmt;
die Richtung der zweiten Drehung unter Verwendung des zweiten Wandlers, während das Fahrzeug gelenkt wird, bestimmt; und,
den zweiten oder dritten Lenkmodus basierend auf der Lenkkorrekturrichtung der ersten Richtung und der Richtung der zweiten Drehung auswählt, um die erste Drehung auf den vorbestimmten Bereich einzustellen.

2.  Mehrachsiges Lenksystem für Baufahrzeuge nach Anspruch 1, wobei:

der zweite Lenkmodus ein Krabbenlenkmodus ist, bei dem sich der erste und der zweite Achsschenkel in die gleiche Richtung drehen; und,
der dritte Lenkmodus ein Allradlenkmodus ist, bei dem sich der erste und der zweite Achsschenkel in entgegengesetzte Richtungen drehen.

3.  Mehrachsiges Lenksystem für Baufahrzeuge nach Anspruch 1 oder 2, umfassend ein Ventil, das eine Position für jeden des ersten, zweiten und dritten Modus aufweist.

4.  Mehrachsiges Lenksystem für Baufahrzeuge nach Anspruch 3, wobei das Ventil in die erste Modusposition vorgespannt ist und mindestens einen Aktuator umfasst, der von der Steuerung gesteuert wird und so konfiguriert ist, dass er das Ventil in die zweite und/oder dritte Modusposition drängt.

5.  Mehrachsiges Lenksystem für Baufahrzeuge nach Anspruch 3, wobei sich das Ventil im ersten Modus in einer zentralen Position befindet und zwei Aktuatoren umfasst, die so konfiguriert sind, dass sie das Ventil in die zweite bzw. in die dritte Modusposition drängen.

6.  Mehrachsiges Lenksystem für Baufahrzeuge nach Anspruch 5, wobei die Steuerung konfiguriert ist zum:

Empfangen einer Fahrereingabe, die sich auf eine angeforderte Änderung des Lenkmodus des Fahrzeugs bezieht;
Bestimmen, wann die erste Drehung ein vorbestimmtes Kriterium erfüllt, das anzeigt, dass sie zentriert ist; und,
Ändern des Lenkmodus des Fahrzeugs, wenn der erste Lenkmodus das vorbestimmte Kriterium erfüllt hat.

7.  Mehrachsiges Lenksystem für Baufahrzeuge nach Anspruch 6, wobei der Lenkmodus des Fahrzeugs von Allradlenkung oder Krabbenlenkung auf Zweiradlenkung geändert wird, oder
wobei der Lenkmodus des Fahrzeugs in Allradlenkung oder Krabbenlenkung geändert wird, und wobei die Steuerung konfiguriert ist zum:

Bestimmen, wann die zweite Drehung ein vorbestimmtes Kriterium erfüllt, das anzeigt, dass sie zentriert ist; und,
Ändern des Lenkmodus des Fahrzeugs, wenn der zweite Lenkmodus das vorbestimmte Kriterium erfüllt hat.

8.  Mehrachsiges Lenksystem für Baufahrzeuge nach Anspruch 1, umfassend einen Aktuator, der von der Steuerung gesteuert wird, um den zweiten oder dritten Lenkmodus auszuwählen, wobei der Aktuator gepulst wird, um die erste Drehung schrittweise auf den vorbestimmten Bereich einzustellen.

9. Mehrachsiges Lenksystem für Baufahrzeuge nach einem vorstehenden Anspruch, wobei die Steuerung konfiguriert ist, um eine erste Drehgeschwindigkeit vom ersten Drehwandler zu bestimmen und den ersten Lenkaktuator basierend auf der Drehgeschwindigkeit zu steuern.

10. Mehrachsiges Lenksystem für Baufahrzeuge nach Anspruch 9, wobei die Steuerung konfiguriert ist zum:

   Speichern einer gewünschten ersten Drehung;
   Überwachen der ersten Drehung;
   Überwachen der ersten Drehgeschwindigkeit;
   Befehlen, den ersten Aktuator anzuhalten, bevor die erste Drehung die gewünschte Drehung erreicht, beispielsweise basierend auf der ersten Drehgeschwindigkeit, wobei die Steuerung konfiguriert ist zum:
   Befehlen, den ersten Aktuator bei einer weiteren Drehung von der gewünschten ersten Drehung anzuhalten, wenn die erste Drehgeschwindigkeit zunimmt.

11. Verfahren zur Steuerung eines mehrachsigen Lenksystems für Baufahrzeuge, umfassend die folgenden Schritte:

   Bereitstellen einer ersten Achse, eines ersten Achsschenkels, der an der ersten Achse befestigt ist, um sich um eine erste Lenkachse zu drehen, eines ersten Lenkaktuators, der so konfiguriert ist, dass er den ersten Achsschenkel um die erste Lenkachse dreht, und eines ersten Drehwandlers, der zur Messung einer ersten Drehung zwischen der ersten Achse und dem ersten Achsschenkel angeordnet ist;
   Bereitstellen einer zweite Achse, die von der ersten in Fahrtrichtung des Fahrzeugs versetzt ist, eines zweiten Achsschenkels, der an der zweiten Achse befestigt ist, um sich um eine zweite Lenkachse zu drehen, eines zweiten Lenkaktuators, der so konfiguriert ist, dass er den zweiten Achsschenkel um die zweite Lenkachse dreht, und eines zweiten Drehwandlers;
   wobei der erste und der zweite Aktuator zweiseitige Hydraulikzylinder sind, die jeweils eine erste und eine zweite Seite aufweisen, wobei der zweite Aktuator eine Hydraulikversorgung aufweist, die so konfiguriert ist, dass sie eine Seite des zweiseitigen Hydraulikzylinders mit unter Druck stehender Hydraulikflüssigkeit versorgt, um den zweiten Achsschenkel zu drehen; und,
   wobei das Fahrzeug aufweist:

      einen ersten Lenkmodus, bei dem das Fahrzeug mit der zweiten Achse gelenkt wird, während die erste Achse ungelenkt ist;
      einen zweiten Lenkmodus, in dem die erste Seite des ersten Aktuators in Fluidverbindung mit der ersten Seite des zweiten Aktuators steht und in dem die zweite Seite des ersten Aktuators in Fluidverbindung mit der zweiten Seite des zweiten Aktuators steht; und
      einen dritten Lenkmodus, in dem die erste Seite des ersten Aktuators in Fluidverbindung mit der zweiten Seite des zweiten Aktuators steht und die zweite Seite des ersten Aktuators in Fluidverbindung mit der ersten Seite des zweiten Aktuators steht;
      das Verfahren weiter umfassend:

         Empfangen von Daten vom ersten Drehwandler und zweiten Drehwandler;
         Versetzen des Fahrzeugs in den ersten Lenkmodus;
         wobei das Verfahren **gekennzeichnet ist durch** Bestimmen, wann die erste Drehung einen vorbestimmten Bereich von Lenkwinkeln auf beiden Seiten von Null überschreitet; und,
         Einleiten einer automatischen Korrektursequenz, die so konfiguriert ist, dass unerwünschte Achsbewegungen automatisch korrigiert werden; und wobei:

            der erste Lenkaktuator verwendet wird, um die erste Drehung 5 auf den vorbestimmten Bereich einzustellen; und,
            wobei während der automatischen Korrektursequenz eine Steuerung:

               eine Lenkkorrekturrichtung der ersten Drehung unter Verwendung des ersten Wandlers bestimmt;
               die Richtung einer zweiten Drehung unter Verwendung des zweiten Wandlers, während das Fahrzeug gelenkt wird, bestimmt; und,
               den zweiten oder dritten Lenkmodus basierend auf der Lenkkorrekturrichtung der ersten Richtung und der Richtung der zweiten Drehung auswählt, um die erste Drehung auf den vorbestimmten Bereich einzustellen.

12. Verfahren zur Steuerung eines mehrachsigen Lenksystems für Baufahrzeuge nach Anspruch 11, wobei:

der zweite Lenkmodus ein Krabbenlenkmodus ist, bei dem sich der erste und der zweite Achsschenkel in die gleiche Richtung drehen; und,
der dritte Lenkmodus ein Allradlenkmodus ist, bei dem sich der erste und der zweite Achsschenkel in entgegengesetzte Richtungen drehen.

13. Verfahren zur Steuerung eines mehrachsigen Lenksystems für Baufahrzeuge nach Anspruch 11 oder 12, umfassend die folgenden Schritte:
Bereitstellen eines Ventils, das eine Position für jeden des ersten, zweiten und dritten Modus aufweist.

14. Verfahren zur Steuerung eines mehrachsigen Lenksystems für Baufahrzeuge nach Anspruch 13, umfassend die folgenden Schritte:

elastisches Vorspannen des Ventils in den ersten Modus
Bereitstellen mindestens eines Aktuators; und,
Verwenden des Aktuators, um das Ventil in den zweiten und/oder dritten Modus zu drängen, oder
umfassend die folgenden Schritte:

Bereitstellen eines ersten Ventilaktuators;
Bereitstellen eines zweiten Ventilaktuators;
Verwenden des ersten Ventilaktuators, um das Fahrzeug in den zweiten Lenkmodus zu versetzen; und,
Verwenden des zweiten Ventilaktuators, um das Fahrzeug in den dritten Lenkmodus zu versetzen.

15. Verfahren zur Steuerung eines mehrachsigen Lenksystems für Baufahrzeuge nach Anspruch 11, umfassend die folgenden Schritte:

Empfangen einer Fahrereingabe, die sich auf eine angeforderte Änderung des Lenkmodus des Fahrzeugs bezieht;
Bestimmen, wann die erste Drehung ein vorbestimmtes Kriterium erfüllt, das anzeigt, dass sie zentriert ist; und,
Ändern des Lenkmodus des Fahrzeugs, wenn der erste Lenkmodus das vorbestimmte Kriterium erfüllt hat, beispielsweise umfassend die folgenden Schritte:
Ändern des Lenkmodus des Fahrzeugs von Allradlenkung oder Krabbenlenkung auf Zweiradlenkung, oder umfassend die folgenden Schritte:

Ändern des Lenkmodus des Fahrzeugs auf Allradlenkung oder Krabbenlenkung;
Bestimmen, wann die zweite Drehung ein vorbestimmtes Kriterium erfüllt, das anzeigt, dass sie zentriert ist; und,
Ändern des Lenkmodus des Fahrzeugs, wenn der zweite Lenkmodus das vorbestimmte Kriterium erfüllt hat.

16. Verfahren zur Steuerung eines mehrachsigen Lenksystems für Baufahrzeuge nach Anspruch 11, umfassend die folgenden Schritte:

Bereitstellen eines Aktuators zum Auswählen des zweiten oder dritten Lenkmodus;
Pulsen des Aktuators, um die erste Drehung schrittweise auf den vorbestimmten Bereich einzustellen.

17. Verfahren zur Steuerung eines mehrachsigen Lenksystems für Baufahrzeuge nach einem der Ansprüche 11 bis 16, umfassend die folgenden Schritte:

Bestimmen einer ersten Drehgeschwindigkeit von dem ersten Drehwandler; und,
Steuern des ersten Lenkaktuators basierend auf der Drehgeschwindigkeit, beispielsweise umfassend die folgenden Schritte:

Speichern einer gewünschten ersten Drehung;
Überwachen der ersten Drehung;

Überwachen der ersten Drehgeschwindigkeit;

Anhalten des ersten Aktuators, bevor die erste Drehung die gewünschte Drehung erreicht, beispielsweise basierend auf der ersten Drehgeschwindigkeit

Anhalten des ersten Aktuators bei einer weiteren Drehung von der gewünschten ersten Drehung, wenn die erste Drehgeschwindigkeit zunimmt.

**Revendications**

1. Système de direction à essieux multiples pour véhicule de construction comprenant :

un premier essieu ;

une première fusée de direction, fixée au premier essieu pour tourner autour d'un premier axe de direction ;

un premier actionneur de direction, conçu pour faire tourner la première fusée d'essieu autour du premier axe de direction ;

un premier transducteur rotatif, agencé pour mesurer une première rotation entre le premier essieu et la première fusée d'essieu autour du premier axe de direction ;

un second essieu, décalé du premier dans une direction de déplacement du véhicule ;

une seconde fusée d'essieu, fixée au second essieu pour tourner autour d'un second axe de direction ;

un second actionneur de direction conçu pour faire tourner la seconde fusée d'essieu autour du second axe de direction ; et,

un second transducteur rotatif, agencé pour mesurer une seconde rotation entre le second essieu et la seconde fusée d'essieu ;

dans lequel :

les premier et second actionneurs sont des vérins hydrauliques à deux côtés, ayant chacun un premier et un second côté ; et,

le second actionneur comporte une alimentation hydraulique conçue permettant de fournir un fluide hydraulique sous pression à un côté du vérin hydraulique bilatéral pour faire tourner le seconde fusée d'essieu ;

et dans lequel le système comporte :

un premier mode de direction, dans lequel le véhicule est dirigé par le second essieu tandis que le premier essieu est non dirigé ;

un deuxième mode de direction, dans lequel le premier côté du premier actionneur est en communication fluidique avec le premier côté du second actionneur, et dans lequel le second côté du premier actionneur est en communication fluidique avec le second côté du second actionneur ; et,

un troisième mode de direction, dans lequel le premier côté du premier actionneur est en communication fluidique avec le second côté du second actionneur, et dans lequel le second côté du premier actionneur est en communication fluidique avec le premier côté du second actionneur ;

dans lequel le système de direction à essieux multiples pour véhicule de construction comprend en outre :

un dispositif de commande, conçu :

pour recevoir des données du premier transducteur rotatif et du second transducteur rotatif ;

**caractérisé :**

**par** le fait de déterminer quand la première rotation dépasse une plage prédéfinie d'angles de direction de part et d'autre de zéro ; et,

par le fait de lancer une séquence de correction automatique, conçue pour corriger automatiquement le mouvement indésirable de l'essieu ; et dans lequel :

le premier actionneur de direction sert à régler la première rotation dans la plage prédéfinie ; et,

dans lequel, pendant la séquence de correction automatique, le dispositif de commande :

détermine une direction de correction de direction de la première rotation en utilisant le premier transducteur ;

détermine le sens de la seconde rotation en utilisant le second transducteur pendant que le véhicule est dirigé ; et,

sélectionne le deuxième ou le troisième mode de direction, en fonction de la direction de correction de direction de la première direction et du sens de la seconde rotation, pour régler la première rotation dans la plage prédéfinie.

2. Système de direction à essieux multiples pour véhicule de construction selon la revendication 1, dans lequel :

le deuxième mode de direction est un mode de braquage en biais, dans lequel les première et seconde fusées d'essieu tournent dans le même sens ; et,
le troisième mode de direction est un mode de direction à quatre roues, dans lequel les première et seconde fusées d'essieu tournent dans des sens opposés.

3. Système de direction à essieux multiples pour véhicule de construction selon la revendication 1 ou 2, comprenant une soupape adoptant une certaine position pour chacun des premier, deuxième et troisième modes.

4. Système de direction à essieux multiples pour véhicule de construction selon la revendication 3, dans lequel la soupape est sollicitée dans la première position de mode, et comprend au moins un actionneur, commandé par le dispositif de commande et conçu pour pousser la soupape dans la deuxième et/ou troisième position de mode.

5. Système de direction à essieux multiples pour véhicule de construction selon la revendication 3, dans lequel la soupape est dans une position centrale dans le premier mode, et comprend deux actionneurs, conçus pour pousser la soupape dans la deuxième ou troisième position de mode respectivement.

6. Système de direction à essieux multiples pour véhicule de construction selon la revendication 5, dans lequel le dispositif de commande est conçu :

pour recevoir une entrée du conducteur, concernant un changement demandé du mode de direction de véhicule ;
pour déterminer quand la première rotation répond à un critère prédéfini indiquant qu'elle est centrée ; et,
pour changer le mode de direction de véhicule lorsque le premier mode de direction a répondu au critère prédéfini.

7. Système de direction à essieux multiples pour véhicule de construction selon la revendication 6, dans lequel le mode de direction de véhicule passe de quatre roues directrices ou d'une direction en biais à deux roues directrices, ou
dans lequel le mode de direction de véhicule passe en quatre roues directrices ou en déplacement de biais, et dans lequel le dispositif de commande est conçu :

pour déterminer le moment où la seconde rotation répond à un critère prédéfini indiquant qu'elle est centrée ; et,
pour changer le mode de direction de véhicule lorsque le deuxième mode de direction répond au critère prédéfini.

8. Système de direction à essieux multiples pour véhicule de construction selon la revendication 1, comprenant un actionneur commandé par le dispositif de commande pour sélectionner le deuxième ou troisième mode de direction, dans lequel l'actionneur est pulsé pour régler par incréments la première rotation dans la plage prédéfinie.

9. Système de direction à essieux multiples pour véhicule de construction selon l'une quelconque des revendications précédentes, dans lequel le dispositif de commande est conçu pour déterminer une première vitesse de rotation à partir du premier transducteur rotatif et pour commander le premier actionneur de direction en fonction de la vitesse de rotation.

10. Système de direction à essieux multiples pour véhicule de construction selon la revendication 9, dans lequel le dispositif de commande est conçu :

pour stocker une première rotation souhaitée ;
pour surveiller la première rotation ;
pour surveiller la première vitesse de rotation ;
pour ordonner au premier actionneur de s'arrêter avant que la première rotation n'atteigne la rotation souhaitée en fonction de la première vitesse de rotation, par exemple dans lequel le dispositif de commande est conçu :
pour ordonner au premier actionneur de s'arrêter à une rotation plus éloignée de la première rotation souhaitée lorsque la première vitesse de rotation augmente.

11. Procédé de commande d'un système de direction à essieux multiples pour véhicule de construction comprenant les étapes :

de fourniture d'un premier essieu, d'une première fusée de direction, fixée au premier essieu pour tourner autour d'un premier axe de direction, d'un premier actionneur de direction, conçu pour faire tourner la première fusée de direction autour du premier axe de direction, et d'un premier transducteur rotatif, agencé pour mesurer la rotation entre le premier essieu et la première fusée d'essieu ;

de fourniture d'un second essieu, décalé du premier dans une direction de déplacement du véhicule, d'une seconde fusée d'essieu, fixée au second essieu pour tourner autour d'un second axe de direction, d'un second actionneur de direction, conçu pour faire tourner la seconde fusée d'essieu autour du second axe de direction et d'un second transducteur rotatif ;

dans lequel les premier et second actionneurs sont des vérins hydrauliques bilatéraux dont chacun présente un premier et un second côté, le second actionneur ayant une alimentation hydraulique conçue pour fournir un fluide hydraulique sous pression à un côté du vérin hydraulique bilatéral pour faire tourner la seconde fusée d'essieu ; et,

dans lequel le véhicule présente :

un premier mode de direction, dans lequel le véhicule est dirigé par le second essieu tandis que le premier essieu est non dirigé ;

un deuxième mode de direction, dans lequel le premier côté du premier actionneur est en communication fluidique avec le premier côté du second actionneur et dans lequel le second côté du premier actionneur est en communication fluidique avec le second côté du second actionneur ; et

un troisième mode de direction, dans lequel le premier côté du premier actionneur est en communication fluidique avec le second côté du second actionneur et le second côté du premier actionneur est en communication fluidique avec le premier côté du second actionneur ;

le procédé comprenant en outre :

la réception des données à partir du premier transducteur rotatif et du second transducteur rotatif ;

le placement du véhicule dans le premier mode de direction ;

le procédé étant **caractérisé par** la détermination du moment où la première rotation dépasse une plage prédéfinie d'angles de braquage de part et d'autre de zéro ; et,

le lancement d'une séquence de correction automatique qui est conçue pour corriger automatiquement un mouvement indésirable d'essieu ; et, dans lequel :

le premier actionneur de direction sert à régler la première rotation 5 de la plage prédéfinie ; et,

dans lequel, pendant la séquence de correction automatique, un dispositif de commande :

détermine une direction de correction de direction de la première rotation en utilisant le premier transducteur ;

détermine le sens d'une seconde rotation en utilisant le second transducteur pendant que le véhicule est dirigé ; et,

sélectionne le deuxième ou le troisième mode de direction en fonction de la direction de correction de direction de la première direction et du sens de la seconde rotation, pour régler la première rotation à l'intérieur de la plage prédéfinie.

12. Procédé de commande d'un système de direction à essieux multiples pour véhicule de construction selon la revendication 11, dans lequel :

le deuxième mode de direction est un mode de braquage en biais, dans lequel les première et seconde fusées d'essieu tournent dans le même sens ; et,

le troisième mode de direction est un mode de direction à quatre roues, dans lequel les première et seconde fusées d'essieu tournent dans des sens opposés.

13. Procédé de commande d'un système de direction à essieux multiples pour véhicule de construction selon la revendication 11 ou 12, comprenant l'étape :

de fourniture d'une soupape ayant une position pour chacun des premier, deuxième et troisième modes.

14. Procédé de commande d'un système de direction à essieux multiples pour véhicule de construction selon la revendication 13, comprenant les étapes :

de sollicitation élastique de la soupape dans le premier mode

de fourniture d'au moins un actionneur ; et,

d'utilisation de l'actionneur pour pousser la soupape dans le deuxième et/ou troisième mode, ou comprenant l'étape :

de fourniture d'un premier actionneur de soupape ;

de fourniture d'un second actionneur de soupape ;

d'utilisation du premier actionneur de soupape pour placer le véhicule dans le deuxième mode de direction ; et,

d'utilisation du deuxième actionneur de soupape pour placer le véhicule dans le troisième mode de direction.

15. Procédé de commande d'un système de direction à essieux multiples pour véhicule de construction selon la revendication 11, comprenant les étapes :

de réception d'une entrée du conducteur concernant un changement demandé dans le mode de direction de véhicule ;

de détermination du moment où la première rotation répond à un critère prédéfini indiquant qu'elle est centrée ; et,

de changement du mode de direction de véhicule lorsque le premier mode de direction a répondu au critère prédéfini, comprenant par exemple les étapes :

de changement du mode de direction de véhicule de quatre roues directrices ou d'une direction en biais à deux roues directrices ou comprenant les étapes :

de changement du mode de direction de véhicule en quatre roues directrices ou en direction en biais ;

de détermination du moment où la seconde rotation répond à un critère prédéfini indiquant qu'elle est centrée ; et,

de changement du mode de direction de véhicule lorsque le deuxième mode de direction répond au critère prédéfini.

16. Procédé de commande d'un système de direction à essieux multiples pour véhicule de construction selon la revendication 11, comprenant les étapes :

de fourniture d'un actionneur permettant de sélectionner le deuxième ou le troisième mode de direction ;

d'impulsion de l'actionneur pour régler par incréments la première rotation dans la plage prédéfinie.

17. Procédé de commande d'un système de direction à essieux multiples pour véhicule de construction selon l'une quelconque des revendications 11 à 16, comprenant les étapes :

de détermination d'une première vitesse de rotation à partir du premier transducteur rotatif ; et,

de commande du premier actionneur de direction en fonction de la vitesse de rotation, comprenant par exemple les étapes :

de mémorisation d'une première rotation souhaitée ;

de surveillance de la première rotation ;

de surveillance de la première vitesse de rotation ;

d'arrêt du premier actionneur avant que la première rotation n'atteigne la rotation souhaitée en fonction de la première vitesse de rotation, par exemple

d'arrêt du premier actionneur à une rotation éloignée de la première rotation souhaitée lorsque la première vitesse de rotation augmente.

Fig. 1a          Fig. 1b          Fig. 1c

Fig. 2

Fig. 3a

Fig. 3b

62a    62b    62c          64b        64a

62                                              64

Fig. 4

66                  68                  70

2WS              4WS              C    S

Fig. 5

Fig. 6

Fig. 7

Fig. 8

Fig. 9

Fig. 10

**REFERENCES CITED IN THE DESCRIPTION**

**Patent documents cited in the description**

- DE 4334279